Europäisches Patentamt

European Patent Office

Office européen des brevets

(19)

(11) Publication number: **0 034 932**

**B1**

(12) EUROPEAN PATENT SPECIFICATION

(45) Date of publication of patent specification: 02.05.84

(51) Int. Cl.³: **F 16 K   17/10**

(21) Application number: **81300725.9**

(22) Date of filing: **20.02.81**

(54) Pilot valve for a main safety valve.

(30) Priority: **25.02.80 GB 8006323**

(43) Date of publication of application:
**02.09.81 Bulletin 81/35**

(45) Publication of the grant of the patent:
**02.05.84 Bulletin 84/18**

(84) Designated Contracting States:
**FR GB SE**

(56) References cited:
**AT - B - 286 043**
**US - A - 2 833 304**
**US - A - 3 460 559**

(73) Proprietor: **WHESSOE PUBLIC LIMITED COMPANY**
**Darlington**
**Co. Durham DL3 6DS (GB)**

(72) Inventor: **Williams, John Arthur**
**13 Springfield Skeeby**
**Richmond North Yorkshire (GB)**

(74) Representative: **Harrison, Philippa Dinah et al,**
**A. A. THORNTON & CO Northumberland House**
**303-306 High Holborn**
**London WC1V 7LE (GB)**

Courier Press, Leamington Spa, England.

# Pilot valve for a main safety valve

The present invention relates to pilot valves for assisting operation on main safety valves.

Vessels containing materials under superatmospheric pressure are normally provided with a safety valve which is arranged to open at a set pressure within the vessel. Particularly where the set pressure is critical, such safety valves are frequently assisted by pilot valves which operate to ensure that the main valve opens at the set pressure. The requirement on such pilot valves for accuracy of operation is consequently high, and is difficult to achieve particularly where the set pressure is only slightly above atmospheric pressure, for example from 10 m bar to 125 m bar above atmospheric pressure.

A pilot valve for assisting operation of a main valve to cause the main valve to open at a set input pressure is known from U.S. Patent Specification No. 3583432. The pilot valve comprises diaphragm means arranged in use so that one face is permanently subject to input pressure, the diaphragm means being connected for movement with a valve member for opening and closing an opening in a valve seat, and biasing means biasing the valve member to its closed position, the valve being arranged such that the valve member will move to its open position at an input pressure which is higher than that at which it will move to its closed position. In this known pilot valve the diaphragm means comprises two diaphragms both of which are connected for movement with the valve member. One face of one of the diaphragms is subject to input pressure and one face of the other one of the diaphragms is subject to atmospheric pressure. The other two faces of the diaphragms together define a space connected by a passage provided with a restriction to input pressure and to the main valve. So far as the valve member is concerned, it has only one effective face and that is exposed to the pressure subsisting in the main valve. Opening of the valve member is controlled by the diaphragm means which are progressively stressed as the input pressure increases. Because the diaphragm means are in effect permanently stressed, their operating life will be correspondingly reduced.

According to the present invention the pilot valve is characterised in that the diaphragm means comprises a single diaphragm, the valve member is arranged in use to be subject to a substantially constant pressure on one face, the other face of the valve member defining with the other face of the diaphragm a space which is in communication by restricted passage means with input pressure so that, with the valve member in its closed position, the other face of the valve member and both faces of the diaphragm are subject to input pressure, the space being in use connected to the main valve for causing opening of the main valve on movement of the valve member to its open position, the biasing means biasing the valve member to its closed position against input pressure.

The main advantage offered by the invention is that, by the arrangement of the diaphragm means and valve member, movement of the valve member to its open position can be controlled by the pressure differential across the valve member in relation to the bias provided by the biasing means. Once the valve member is in its open position, it can be maintained open by the differential pressure which is established across the diaphragm. During periods when the valve member is in its closed position, both faces of the diaphragm are subject to input pressure and the diaphragm can therefore be unstressed, which will considerably extend its working life.

The input pressure at which the valve will close is determined by the effective area of the diaphragm means and the biasing means, and the valve will only close when the input pressure has dropped below the set input pressure at which it opens by a predetermined amount.

Where the biasing force of the biasing means is constant, the effective area of the diaphragm may be greater than that of the valve member. However the biasing means may include means providing a constant biasing force together with means providing a biasing force which is effective only when the valve member is in its closed position or immediately adjacent thereto. Under such circumstances the effective area of the diaphragm may be only slightly greater than or equal to the effective area of the valve member.

In use, the pilot valve is connected to the main valve so that opening and closing of the pilot valve member causes opening and closing of the main valve to relieve the over-pressure in the vessel to which the valves are connected.

Preferably the pilot valve comprises a generally cylindrical housing in which the diaphragm extends in a generally diametral plane. The valve seat is defined by an apertured wall also extending in a generally diametral plane and the diaphragm and valve member are connected together by a shaft extending generally axially of the housing and which is guided in the wall.

The biasing means may include a spring bearing on the end of the shaft so as to bias the valve member against the wall with a constant biasing force. Alternatively, the biasing means may include, in addition to the spring, magnetic means comprising two parts which are attracted together when the valve member is in its closed position or close to its closed position. For example, the magnetic biasing means may comprise a magnet mounted in an adjustable position adjacent one end of the shaft and a magnetic member mounted on the other end of the shaft.

The housing may conveniently be made in three parts, two end parts and an intermediate part, the intermediate part providing the wall and the periphery of the diaphragm being clamped between the intermediate part and one end part.

The invention will be more fully understood from the following description of embodiments thereof, given by way of example only, with reference to the accompanying drawings, in which:

Figure 1 is a vertical section through an embodiment of a pilot valve according to the present invention;

Figure 2 shows a modification of the valve of Figure 1;

Figure 3 is a vertical section through another embodiment of a pilot valve according to the present invention; and

Figure 4 is a diagrammatic view showing the pilot valve of Figure 1 connected to a main valve and to a vessel.

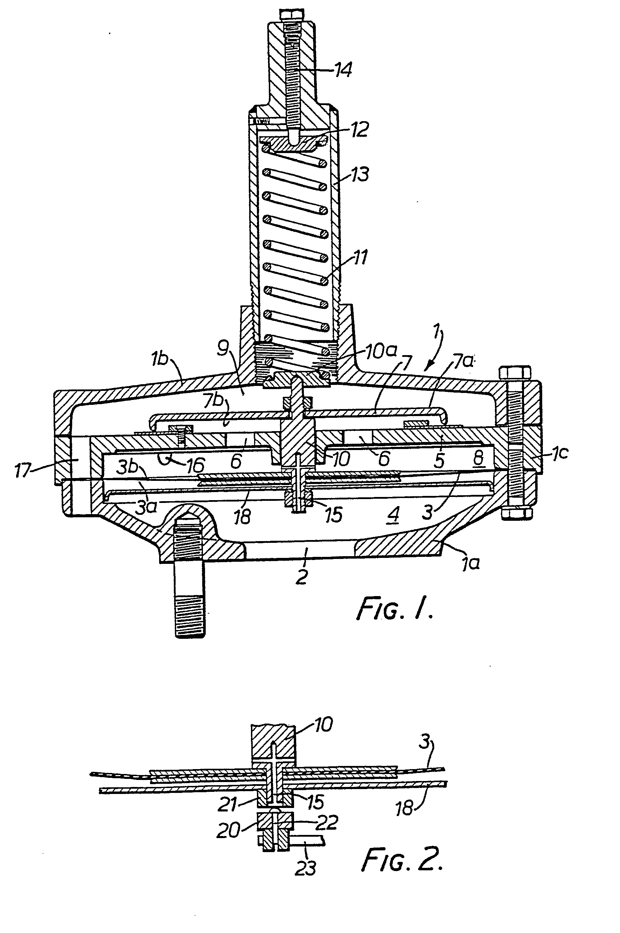

As shown in Figure 1, the pilot valve comprises a generally cylindrical housing 1 having a generally axial inlet 2 at one end for connection to, for example, a nozzle on a vessel such as a tank. A diaphragm 3 is mounted in the housing and arranged so that one face 3a together with part of the housing 1 defines a first chamber 4 which is in communication via inlet 2 with input or tank pressure.

The other face 3b of the diaphragm 3 faces a wall 5 which is provided with apertures 6 and forms a seat for a valve member 7 which is movable between an open position and a closed position, as shown, opening and closing communication between the chamber 8 defined by the other face 3b of the diaphragm and the opposed face 7b of the valve member, and a chamber 9 defined by face 7a of the valve member and part of the housing 1.

The diaphragm 3 and valve member 7 are mounted on and connected together by a shaft 10 which is received and guided by wall 5. The valve member 7 is biased to its closed position by biasing means providing a constant biasing force, e.g., as shown, a spring 11 acting between a member 10a on the end of the shaft 10 and an adjustable member 12 provided at the end of a housing extension 13. Member 12 is arranged at the end of a threaded adjustment member 14 which can be screwed in or out of the housing extension 13 to adjust the biasing force of the spring 11.

Chambers 4 and 8 are permanently in communication via restricted passage means 15 in the shaft 10. Chamber 8 is also in communication via port 16 with the main valve, and chamber 9 is in communication with a substantially constant pressure source, such as the atmosphere, via duct 17.

The above described pilot valve operates as follows. Under normal conditions within the tank to which inlet 2 is connected, the valve is closed and the components have the position shown in Figure 1. The diaphragm 3 is unstressed and both its faces 3a, 3b are subject to input pressure, as is the face 7b of the valve member. Face 7a of the valve member is subject to atmospheric pressure. The adjustment member 14 is initially adjusted to set the set pressure (relative to atmospheric pressure) at which the pilot valve will open, the valve member 7 lifting off the valve seat provided by wall 5 at this set pressure. At this point chamber 8 is opened to atmosphere so that the diaphragm 3 is then subject on face 3b to atmospheric pressure and on face 3a to input pressure. The diaphragm 3 will thus assist in maintaining valve member 7 open. In this embodiment the effective area of the diaphragm 3 subject to input pressure is greater than that of the valve member 7, so that the diaphragm 3 will hold the valve member open until the input pressure has dropped by a predetermined amount below the set pressure at which the pilot valve opens, this amount being determined by the difference in the effective areas of the diaphragm 3 and the valve member 7. As soon as the input pressure has dropped by this predetermined amount, the biasing force of the spring 11 overcomes the force of the diaphragm and closes the valve member. Input pressure is then re-established in chamber 8 so that the valve returns to its initial condition.

It will be appreciated that the difference in pressure at which the pilot valve opens and closes is determined by the relative dimensions of the diaphragm 3 and the valve member 7, but that the level of the set pressure at which the valve opens can be adjusted by adjustment of the spring, and this is the only adjustment which is required.

The pilot valve housing 1 is conveniently made in three parts being two end parts 1a, 1b and an intermediate part 1c. Part 1c is integral with the wall 5 and the periphery of the diaphragm is clamped between intermediate part 1c and end part 1a. As shown the three parts are bolted together and can easily be separated for maintenance and checking of the pilot valve. As a fail-safe measure, in the event of rupture of the diaphragm 3, the valve also includes a piston 18 mounted on shaft 10. In normal operation this piston takes no part in operation of the pilot valve, but if the diaphragm 3 ruptures it in effect replaces the diaphragm although, because it has a larger effective area than the diaphragm, the pressure at which the pilot valve will close will be lower than that when the diaphragm is operating.

In a modification of the above described pilot valve, the constant biasing force of the spring 11 is supplemented by biasing means which is effective when the valve member is closed or is immediately adjacent its closed position and which assists the snap action of the pilot valve in opening and provides the valve with a snap action in closing. As shown in Figure 2, a permanent magnet 20 is mounted adjacent the lower end of the shaft 10 and the shaft 10 is provided at its lower end with a magnetic body 21, for example, the clamp nut which is threaded onto the end of shaft 10 to hold the diaphragm 3 and piston 18 on the shaft 10, may be made of magnetic material. In this embodiment, the lower end of the shaft 10 is provided with grooves connected with passage 15 and is at all times spaced from the magnet 20. The magnet 20 is held on its mounting means 23 by a stud 22. In operation, the valve member will move to its open position when the resultant force of the differential pressure across the valve member equals the biasing force of the spring and of the magnet, and, once the valve member starts to move to its open position it will snap into its open position. As the valve member moves to its closed position it will snap shut as soon as the mber 21 comes within the range of the magnet 20. This magnetic biasing means provides the pilot valve with a very positive opening and closing action which is particularly useful at relatively low operating pressures.

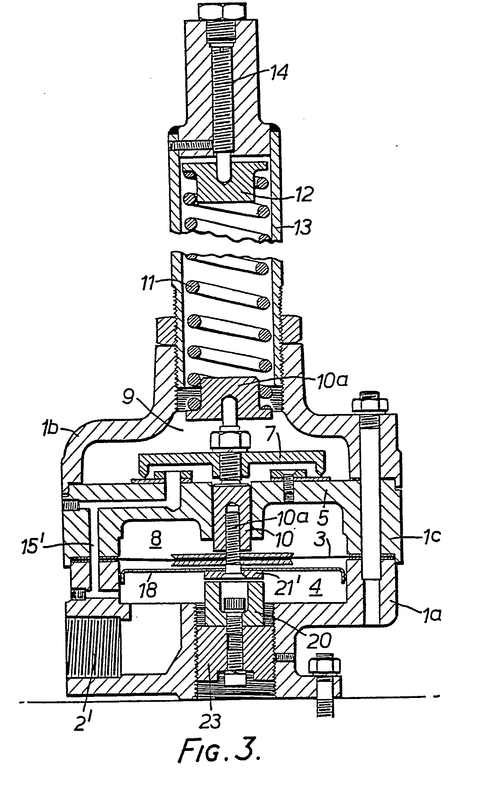

Figure 3 shows another embodiment of a pilot valve according to the present invention which is, in many respects, similar to that of Figure 1. Like parts have been given the same reference numerals as are used in Figure 1 and description of this embodiment will be limited to the features by which it differs from the embodiment of Figure 1.

While not apparent from Figure 3, chamber 9 is in communication with the atmosphere by a passage similar to passage 17 through parts 1b and 1c of the housing 1, chamber 8 is in communication with the main valve through a passage similar to passage 16, and passages similar to passage 6 are provided in the wall 5. In this embodiment, the pilot valve is connected laterally to the vessel by a lateral passage 2' in part 1a and the restricted connection between chambers 4 and 8 is provided by a passage 15' in parts 1a, 1c which opens laterally into chamber 4 and in the wall 5 beneath the valve member 7. As shown, this pilot valve includes the modification of Figure 2 and is provided with a magnet 20' mounted on mounting means 23 in an axial opening in part 1a of the housing. Mounting means 23 is adjustably positionable in the opening. A magnetic member 21' is provided at the end of shaft 10 facing the magnet 20' and serves, together with threaded member 10a, to hold the piston 18 and diaphragm 3 on the shaft 10.

Where the biasing means biasing the valve member to its closed position includes means providing a biasing force which is effective only when the valve member is in or immediately adjacent its closed position, it will be appreciated that the effective area of the diaphragm may be the same or only slightly greater than that of the valve member and the pilot valve will still operate to close when the input pressure has dropped by a predetermined amount below the set opening pressure. In this case the input pressure at which the valve will close is determined not only by the difference, if any, between the effective areas of the diaphragm and valve member, but also by the magnetic biasing force, and can be adjusted by adjusting the position of the magnet.

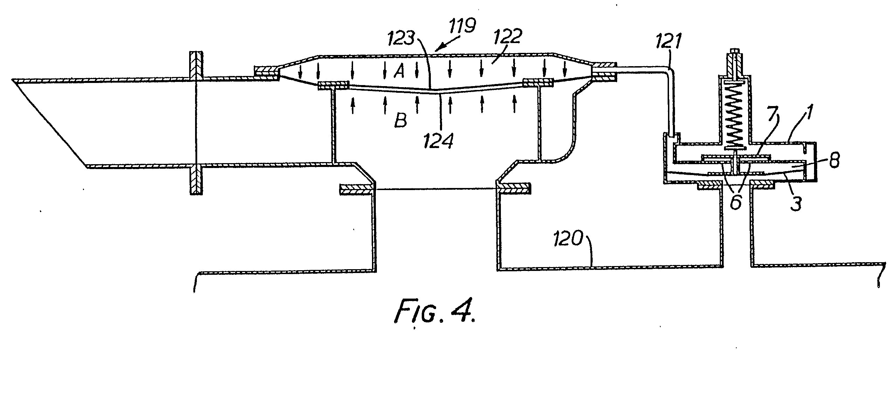

The above described pilot valves are useful with any suitable main valve of the bellows or diaphragm type and, by way of example, Figure 4 shows diagrammatically the connection of the pilot valve of Figure 1 with a diaphragm type main pressure relief valve 119, the two valves being mounted on the wall of a tank or reservoir 120. It will be appreciated that the connection of a pilot valve according to Figure 3 to a main valve will be exactly the same, the difference being that the pilot valve will be connected laterally to the tank rather than axially.

As shown in Figure 4, chamber 8 of the pilot valve is connected by pipework 121 to a space 122 above a diaphragm 123 which, as shown, closes a valve seat 124. During normal operating conditions, the pressure within chamber 122 is tank pressure but, since the diaphragm 123 has a greater effective area than the area of the seat 124, the diaphragm 123 is held in a closed position against the seat. As soon as the pilot valve opens, chamber 122 is connected via the pilot valve to the atmosphere so that the pressure falls and the diaphragm 123 will lift off the seat 124 to open the tank to atmosphere. When the pilot valve closes, pressure is again established in chamber 122 and the main valve closes.

It will be appreciated that the pilot valve described above can be made of any material suitable for the particular operating conditions. For example, for use with vessels containing ammonia or low temperature liquids the valve housing may be made of stainless steel and the diaphragm of PTFE with or without glass reinforcement. For less stringent operating conditions, the valve housing could be made of aluminium or cast iron and the diaphragm of a rubber elastomer.

It will be appreciated that the relative dimensions of the pilot valve diaphragm 3 and valve member 7 can be varied depending on the requirements for the pilot valve. As this pressure at which the pilot valve is to open increases above atmospheric pressure, the area of the diaphragm and valve member are of course reduced.

There are thus described pilot valves which are of simple and therefore cheap construction, which are easy to operate and maintain and are very simple to adjust to set the predetermined pressure levels.

## Claims

1. A pilot valve for assisting operation of a main valve to cause the main valve to open at a set input pressure, the pilot valve comprising diaphragm means (3) arranged in use so that one face (3a) is permanently subject to input pressure, the diaphragm means being connected for movement with a valve member (7) for opening and closing an opening in a valve seat (5), and biasing means (11; 11 and 20, 21) for biasing the valve member to its closed position, the valve being arranged such that the valve member will move to its open position at an input pressure which is higher than that at which it will move to its closed position, characterised in that the diaphragm means (3) comprises a single diaphragm, the valve member (7) is arranged in use to be subject to a substantially constant pressure on one face (7a), the other face (7b) of the valve member defining with the other face (3b) of the diaphragm a space (8) which is in communication by restricted passage means (15) with input pressure so that, with the valve member in its closed position, the other face (7b) of the valve member and both faces (3a, 3b) of the diaphragm are subject to input pressure, the space (8) being in use connected to the main valve for causing opening of the main valve on movement of the valve member to its open position, the biasing means (11; 11 and 20, 21) biasing the valve member to its closed position against input pressure.

2. A valve according to claim 1, characterised in that the diaphragm (3) is mounted in a housing with the one face (3a) thereof defining with the housing a first chamber (4) for connection to the source of input pressure, the valve seat (5) and the valve member (7) are mounted in the housing and define with the other face (3b) of the diaphragm the space (8) in the form of a second chamber (8), a third chamber (9) being defined by the other face (7a) of the valve member, the valve seat and the housing and being connectable to a source of the substantially constant pressure.

3. A valve according to claim 2, characterised in that the housing (1) is generally cylindrical, the diaphragm (3) extending in a generally diametral plane thereacross, the valve seat being defined by an apertured wall (5) extending generally diametrally of the housing, and the diaphragm (3) and valve member (7) being connected by a shaft (10) extending generally axially of the housing and which is guided in the wall.

4. A valve as claimed in claim 3, characterised in that the housing comprises three parts (1a, 1b, 1c), two end parts and an intermediate part, the wall (5) being made integral with the intermediate part (1c) and the periphery of the diaphragm (3) being clamped between the intermediate part (1c) and one end part (1a).

5. A valve as claimed in either claim 3 or claim 4, characterised in that it includes a piston (18) mounted on the shaft (10) and extruding within the first chamber (4) for controlling closing of the valve member in the event of rupture of the diaphragm.

6. A valve according to any one of the preceding claims, characterised in that the diaphragm (3) has a greater effective area subject to input pressure than the valve member (7).

7. A valve according to any one of the preceding claims, characterised in that the biasing means (11) comprises means providing a constant biasing force.

8. A valve according to any one of the preceding claims, characterised in that the biasing means (11 and 20, 21) comprise means (11) providing a constant biasing force and additional biasing means (20, 21) providing a biasing force effective only when the valve member (7) is in its closed position or immediately adjacent thereto.

9. A valve as claimed in any one of claims 3 to 6, characterised in that the biasing means (11) comprises a spring (11) bearing on the end of the shaft so as to bias the valve member against the wall, the biasing force of the spring (11) being constant but adjustable.

10. A valve according to claim 9, characterised in that biasing means includes magnetic means comprising a first part (20) and a second part (21) which are attracted together when the valve member is in or adjacent its closed position, one part being fixed relative to the housing and the other part being mounted on the shaft.

11. A valve as claimed in claim 10, characterised in that the magnetic biasing means comprises a magnet (20) mounted adjacent the other end of the shaft (10) and a magnetic member (21) mounted on the other end of the shaft (10).

12. A valve as claimed in any one of the preceding claims, characterised in that, when the valve member (7) is in its closed position, the diaphragm (3) is unstressed.

**Revendications**

1. Soupape pilote destinée à assister une soupape principale dans son fonctionnement en provoquant l'ouverture de la soupape principale à une pression d'entrée réglée, comprenant un dispositif à diaphragme (3) agencé de manière que, en service, il soit exposé en permanence par une face (3a) à la pression d'entrée, le dispositif à diaphragme étant relié à un clapet (7) avec lequel il se déplace conjointement pour découvrir et fermer l'ouverture d'un siège de soupape (5), ainsi qu'un dispositif de rappel (11; 11 et 20, 21) pour rappeler le clapet à sa position fermée, la soupape étant agencée pour que le clapet s'ouvre à une pression d'entrée supérieure à la pression d'entrée à laquelle il se ferme, caractérisée en ce que le dispositif à diaphragme (3) est formé d'un seul diaphragme et le clapet (7) est agencé pour être exposé en service à une pression sensiblement constante sur une face (7a),

l'autre face (7*b*) du clapet définissant avec l'autre face (3*b*) du diaphragme un espace (8) qui communique par un passage étranglé (15) avec la pression d'entrée, de sorte que, lorsque le clapet est fermé, l'autre face (7*b*) du clapet et les deux faces (3*a*, 3*b*) du diaphragme sont exposées à la pression d'entrée, l'espace (8) étant raccordé en service à la soupape principale pour provoquer l'ouverture de la soupape principale lors du mouvement d'ouverture du clapet, le dispositif de rappel (11; 11 et 20, 21) rappelant le clapet à sa position fermée contre la pression d'entrée.

2. Soupape selon la revendication 1, caractérisée en ce que le diaphragme (3) est monté dans un corps, de manière qu'une face (3*a*) du diaphragme définit avec le corps une première chambre (4) destinée à être raccordée à la source de pression d'entrée, et le siège (5) et le clapet (7) sont montés dans le corps définissent avec l'autre face (3*b*) du diaphragme l'espace (8), formant une seconde chambre, une troisième chambre (9) étant définie par l'autre face (7*a*) du clapet, le siège et le corps étant susceptibles d'être raccordés à une source de pression sensiblement constante.

3. Soupape selon la revendication 2, caractérisée en ce que le corps (1) possède une forme générale cylindrique, le diaphragm (3) étant disposé au travers de ce corps dans un plan général diamétral, le siège étant défini par une paroi (5) présentant un ou plusieurs orifices et s'étendant généralement diamétralement par rapport au corps, et le diaphragme (3) et le clapet (7) étant reliés par une tige (10) s'étendant généralement dans le sens axial du corps et qui est guidée dans la paroi.

4. Soupape selon la revendication 3, caractérisé en ce que le corps est constitué de trois parties (1*a*, 1*b*, 1*c*), deux parties extrêmes et une partie intermédiaire, la paroi (5) étant d'un seul tenant avec la partie intermédiaire (1*c*) et le bord du diaphragme (3) étant serré entre la partie intermédiaire (1*c*) et une partie extrême (1*a*).

5. Soupape selon la revendication 3 ou 4, caractérisée en ce qu'elle comporte un piston (18), monté sur la tige (10) et situé dans la première chambre (4), qui est destiné à produire la fermeture du clapet en cas de rupture du diaphragme.

6. Soupape selon l'une quelconque des revendications précédentes, caractérisée en ce que le diaphragme (3) possède une plus grande aire utile exposée à la pression d'entrée que le clapet (7).

7. Soupape selon l'une quelconque des revendications précédentes, caractérisée en ce que le dispositif de rappel (11) est formé par un dispositif produisant une force de rappel constante.

8. Soupape selon l'une quelconque des revendications précédentes, caractérisée en ce que le dispositif de rappel (11 et 20, 21) est constitué d'un dispositif (11) produisant une force de rappel constante et d'un dispositif de rappel supplémentaire (20, 21) produisant une force de rappel qui agit seulement lorsque le clapet (7) est à sa position fermée ou à proximité immédiate de cette position.

9. Soupape selon l'une quelconque des revendications 3 à 6, caractérisée en ce que le dispositif de rappel (11) possède un ressort (11) qui porte sur l'extrémité de la tige pour rappeler le clapet contre la paroi, la force de rappel du ressort (11) étant constante mais réglable.

10. Soupape selon la revendication 9, caractérisée en ce que le dispositif de rappel possède en plus un dispositif magnétique constitué d'une première partie (20) et d'une seconde partie (21) qui sont attirées l'une contre l'autre lorsque le clapet est à sa position fermée ou près de cette position, une partie étant fixe par rapport au corps et l'autre partie étant montée sur la tige.

11. Soupape selon la revendication 10, caractérisée en ce que le dispositif de rappel magnétique est constitué d'un aimant (20) monté près de l'autre extrémité de la tige (10) et d'une pièce aimantable (21) montée sur cette autre extrémité de la tige (10).

12. Soupape selon l'une quelconque des revendications précédentes, caractérisée en ce que le diaphragme (3) n'est pas sous contrainte lorsque le clapet (7) occupe sa position fermée.

**Patentansprüche**

1. Schaltventil zum Unterstützen der Betätigung eines Hauptventils, um das Öffnen des Hauptventils bei einem festgesetzten Eingangsdruck zu bewirken, mit Membranmitteln (3), die in Benutzung so angeordnet sind, daß eine Fläche (3a) ständig dem Eingangsdruck ausgesetzt ist, welche Membranmittel zur Bewegung mit einem Ventilteil (7) zum Öffnen und Schließen einer Öffnung in einem Ventilsitz (5) verbunden sind, und mit Vorspannmitteln (11; 11 und 20, 21) zum Vorspannen des Ventilteils in seine Schließposition, wobei das Ventil derart angeordnet ist, daß das Ventilteil bei einem Eingangsdruck in seine Offenstellung bewegt wird, der größer ist also ist derjenige, bei welchem es in seine Schließposition bewegt wird, dadurch gekennzeichnet, daß die Membranmittel (3) eine einzelne Membrane umfassen, und das Ventilteil (7) in Benutzung so angeordnet ist, daß es an einer Fläche (7a) einem im wesentlichen konstanten Druck ausgesetzt ist, wobei die andere Fläche (7b) des Ventilteils mit der anderen Fläche (3b) der Membrane einen Raum (8) definiert, der durch verengte Durchgangsmittel (15) mit dem Eingangsdruck derart in Verbindung steht, daß bei in Schließstellung befindlichem Ventilteil die andere Fläche (7b) des Ventilteils und beide Flächen (3a, 3b) der Membrane dem Eingangsdruck ausgesetzt sind, wobei der Raum (8) in Benutzung mit dem Haupt ventil verbunden ist, um das Öffnen des Hauptventils bei Bewegung des Ventilteils in seine Offenstellung zu bewirken, und die Vorspannmittel (11; 11 und 20, 21) das Ventilteil gegen den Eingangsdruck in seine Schließposition vorspannen.

2. Ventil nach Anspruch 1, dadurch gekennzeichnet, daß die Membrane (3) in einem Gehäuse angeordnet ist und mit ihrer einen Fläche (3a) und mit dem Gehäuse eine erste Kammer (4) zur Verbindung mit der Quelle für den Eingangsdruck definiert, daß der Ventilsitz (5) und das Ventilteil (7) in dem Gehäuse angeordnet sind und mit der anderen Fläche (3b) der Membrane den Raum (8) in Form einer zweiten Kammer (8) definieren, und daß eine dritte Kammer (9) durch die andere Fläche (7a) des Ventilteils, dem Ventilsitz und dem Gehäuse definiert und mit einer Quelle für den im wesentlichen konstanten Druck verbindbar ist.

3. Ventil nach Anspruch 2, dadurch gekennzeichnet, daß das Gehäuse (1) allgemein zylindrisch ist, die Membrane (3) sich in einer allgemein entgegengesetzten Ebene quer dazu erstreckt, der Ventilsitz durch eine sich allgemein entgegengesetzt zum Gehäuse erstreckende durchlöcherte Wand (5) gebildet ist, und die Membrane (3) und das Ventilteil (7) durch einen Schaft (10) verbunden sind, der sich allgemein axial zum Gehäuse erstreckt und in der Wand geführt ist.

4. Ventil nach Anspruch 3, dadurch gekennzeichnet, daß das Gehäuse drei Teile (1a, 1b, 1c), zwei Endteile und einen Mittelteil, umfaßt, wobei die Wand (5) einteilig mit dem Mittelteil (1c) ausgebildet ist und die Peripherie der Membrane (3) zwischen dem Mittelteil (1c) und einem Endteil (1a) eingespannt ist.

5. Ventil nach entweder Anspruch 3 oder Anspruch 4, dadurch gekennzeichnet, daß es einen Stempel (18) aufweist, der an dem Schaft (10) befestigt ist und sich innerhalb der ersten Kammer (4) zum Steuern des Schließens des Ventilteils im Falle des Reißens der Membrane erstreckt.

6. Ventil nach irgendeinem der vorhergehenden Ansprüche, dadurch gekennzeichnet, daß die Membrane (3) eine größere effektive, dem Eingangsdruck ausgesetzte Fläche als das Ventilteil (7) aufweist.

7. Ventil nach irgendeinem der vorhergehenden Ansprüche, dadurch gekennzeichnet, daß die Vorspannmittel (11) Mittel umfassen, die eine konstante Vorspannkraft erzeugen.

8. Ventil nach irgendeinem der vorhergehenden Ansprüche, dadurch gekennzeichnet, daß die Vorspannmittel (11 und 20, 21) eine konstante Vorspannkraft erzeugende Mittel (11) und zusätzliche Mittel (20, 21) umfassen, die eine Vorspannkraft erzeugen, die nur wirksam ist, wenn das Ventilteil (7) sich in seiner Schließstellung oder unmittelbar davor befindet.

9. Ventil nach irgendeinem der Ansprüche 3 bis 6, dadurch gekennzeichnet, daß die Vorspannmittel (11) eine Feder (11) umfassen, die einen Druck auf das Schaftende derart ausübt, daß das Ventilteil gegen die Wand vorgespannt ist, wobei die Vorspannkraft der Feder (11) konstant, aber einstellbar ist.

10. Ventil nach Anspruch 9, dadurch gekennzeichnet, daß die Vorspannmittel magnetische Mittel umfassen, die einen ersten Teil (20) und einen zweiten Teil (21) aufweisen, die sich gegenseitig anziehen, wenn das Ventilteil sich in oder nahe seiner Schließstellung befindet, wobei ein Teil relativ zum Gehäuse bfestigt und der andere Teil an dem Schaft angeordnet ist.

11. Ventil nach Anspruch 1, dadurch gekennzeichnet, daß die magnetischen Vorspannmittel einen nahe dem anderen Ende des Schaftes (10) angeordneten Magneten (20) und einen an dem anderen Ende des Schaftes (10) angeordneten Magnetischen Teil (21) umfassen.

12. Ventil nach irgendeinem der vorhergehenden Ansprüche, dadurch gekennzeichnet, daß die Membrane (3) bei sich in seiner Schließstellung befindlichem Ventilteil (7) spannungsfrei ist.

FIG. 1.

FIG. 2.

FIG.3.

Fig. 4.